# EUROPEAN PATENT SPECIFICATION

(11) **EP 3 305 927 B1**
(45) Date of publication and mention of the grant of the patent: **15.04.2020**
(21) Application number: 16800107.1
(22) Date of filing: 26.05.2016
(51) Int. Cl.: B22F 1/00, B22F 3/02, B22F 3/10, B22F 7/06, C22C 1/04, C22C 32/00, B22F 5/00, B22F 7/08, C22C 1/05

(54) **SINTERED FRICTION MATERIAL FOR HIGH SPEED RAILWAY VEHICLES AND METHOD FOR MANUFACTURING SAME**
GESINTERTES REIBUNGSMATERIAL FÜR HOCHGESCHWINDIGKEITSEISENBAHNFAHRZEUGEN UND VERFAHREN ZUR HERSTELLUNG DAVON
MATÉRIAU DE FRICTION FRITTÉ POUR VÉHICULES FERROVIAIRES À GRANDE VITESSE ET SON PROCÉDÉ DE FABRICATION

(30) Priority: 28.05.2015 JP 2015109214
(43) Date of publication of application: 11.04.2018
(73) Proprietor: Akebono Brake Industry Co., Ltd., Tokyo 103-8534 (JP)
(72) Inventor: OYABU Koji, Tokyo 103-8534 (JP)
(74) Representative: Grünecker Patent- und Rechtsanwälte PartG mbB
(86) International application number: PCT/JP2016/065648
(87) International publication number: WO 2016/190403

(56) References cited:
- CN-A- 1 995 436
- CN-A- 104 525 949
- JP-A- H05 179 232
- JP-A- H05 179 232
- JP-A- H07 102 335
- JP-A- H11 152 538
- JP-A- H11 286 735
- JP-A- S53 146 902
- JP-A- 2007 107 067
- JP-A- 2007 126 738
- US-A- 5 824 923

## Description

### Technical Field

The present invention relates to a sintered friction material for a high speed railway vehicle such as Shinkansen, and a production method thereof.

### Background Art

High speed railway vehicles such as Shinkansen are heavier than 40 tons in weight per one vehicle, and higher than 300 km/h in running speed. Therefore, a brake that can surely stop such a vehicle running at a high speed is essential. Particularly, a brake that can stop the vehicle safely and in a short distance is requested in emergency.

Generally, an electric brake for braking by using a motor as a generator and a foundation brake (disc brake) for braking with a friction material pressed onto a brake rotor rotating with an axle are used together for braking a high speed railway vehicle in the conventional art. Of them, the friction material constituting the disc brake is generally produced through the mixing of a base material such as copper or iron with a friction modifier, an abrasive, a lubricant, etc.

For example, JP-A-2006-16680 discloses a copper-based sintered friction material, which is composed of a sintered body containing 55 wt% to 80 wt% of a matrix metal component, and 20 wt% to 45 wt% of a filler component including a lubricant and a friction modifier, the matrix metal component containing 0.5 wt% to 15 wt% of a tin powder, 0.1 wt% to 30 wt% of a zinc powder, 5 wt % to 25 wt% of a nickel powder, 5 wt % to 25 wt% of an iron powder, 0.1 wt% to 20 wt% of a stainless steel powder, and the balance being a copper powder, in which (1) the total content of the iron powder and the stainless steel powder is 8 wt% to 28 wt%, and (2) the iron powder is an electrolytic iron powder which has been subjected to a heat treatment at a temperature of 600°C to 1,200°C in a hydrogen gas or ammonia gas atmosphere and having a particle diameter range of from 40 µm to 150 µm.

In addition, JP-A-2007-126738 discloses a sintered friction material including a metal material as a matrix and an abrasive and a lubricant, in which the metal material as the matrix contains 25% by volume to 50% by volume of cast iron, and 1% by volume to 7% by volume of copper.

However, each of the sintered friction materials disclosed in the literatures has a problem in a friction coefficient or wear resistance in a high speed range. More specifically, the sintered friction material disclosed in JP-A-2006-16680 uses the electrolytic iron powder and the stainless steel powder in combination to generate voids in the friction material by use of a function of an iron element to impede sintering so that a friction coefficient can be ensured due to an abrasive function attained by the voids. It is therefore impossible to deal with a high speed railway vehicle in a higher speed (350 km/h or higher). On the other hand, in the technique disclosed in JP-A-2007-126738, due to an iron-based alloy used as a base material, thermal conductivity is inferior to that in a copper-based sintered friction material. Thus, there is a problem that a sudden temperature rise occurs during deceleration. In addition, since the wear amount increases during the deceleration due to a relation to a counterpart material (brake rotor), there is a problem that it is difficult to ensure satisfactory wear resistance.

JP-A-2012-207289 discloses another sintered friction material for a high speed railway vehicle, which contains 7.5% by mass or more of Fe, 50% by mass or more of Cu, 5% by mass to 15% by mass of graphite, 0.3% by mass to 7% by mass of molybdenum disulfide, and 0.5% by mass to 10% by mass of silica, in which a ratio of Fe/Cu is 0.15 to 0.40. In the sintered friction material, the Fe added to the copper-based sintered friction material reacts with Fe contained in a counterpart material so that the both can be adhered with each other to obtain a high friction coefficient. In addition, since copper having excellent thermal conductivity is used as a base material, temperature would be prevented from rising suddenly during deceleration.

However, even in the sintered friction material, the surface thereof reaches a high temperature beyond 1,000°C due to friction heat generated during deceleration. Therefore, the Fe added as a friction modifier is oxidized. When an iron oxide layer is thus formed in the surface of the sintered friction material, satisfactory adhesion force cannot be exerted. According to the technique disclosed in the literature, it is therefore difficult to keep the high friction coefficient stably for a long time.

JP-A-S60-200932 discloses a technique in which 1% by mass to 20% by mass of FeCr is added to a copper-based sintered friction material to enhance heat fade properties and water fade properties and to improve a friction coefficient and wear resistance particularly at a high temperature range.

However, the sintered friction material disclosed in the literature is aimed at not a high speed railway vehicle but a two-wheeled vehicle. That is, in the technique disclosed in the literature, a friction coefficient is ensured due to scratching action of a metal oxide such as silica or alumina, and FeCr is added only to prevent the base material from being deposited (adhered) or from plastically flowing, to thereby improve wear resistance. According to the technique disclosed in the literature, it is therefore extremely difficult to deal with a high speed railway vehicle in a further higher speed, as in the technique disclosed in JP-A-2006-16680.

CN 1 995 436 A discloses a copper-based, reinforced friction material, which comprises the following parts: 30 wt% to 70 wt% of copper, 4 wt% to 11 wt% of tin, 1 wt% to 15 wt% of aluminum, 5 wt% to 18 wt% of iron, 2 wt% to 15 wt% of Al₂O₃, 2 wt% to 15 wt% of SiO₂, 0 wt% to 15 wt% of ferrochrome and 5 wt% to 20 wt% of graphite. The material is designed for railway vehicles running at speeds higher than 200 km/h.

CN 104 525 949 A discloses a high-friction wear-resistant copper-based composite material and its preparation method. 2 wt% to 10 wt% of zirconia toughened alumina is added to the composite mixture to help further improve the wear resistance and thereby enhancing the braking efficiency.

### Citation List

### Patent Literature

Patent Literature 1: JP-A-2006-16680
Patent Literature 2: JP-A-2007-126738
Patent Literature 3: JP-A-2012-207289
Patent Literature 4: JP-A-S60-200932
Patent Literature 5: CN 1 995 436 A
Patent Literature 6: CN 104 525 949 A

### Summary of the Invention

### Technical Problems

An object of the present invention is to provide a sintered friction material for a high speed railway vehicle, capable of keeping a high friction coefficient stably even in a high speed range beyond 300 km/h. Another object of the present invention is to provide a method capable of easily producing the sintered friction material for a high speed railway vehicle in a factory scale.

### Solution to Problems

The sintered friction material for a high speed railway vehicle in the present invention includes Cu as a base material, and 1% by volume to 20% by volume of FeCr, 5% by volume to 20% by volume of a metal oxide, and 30% by volume to 60% by volume of a lubricant.

The Cu is contained in an amount of 20% by volume to 50% by volume.

The metal oxide is MgO, ZrO₂ and Al₂O₃. It is preferred that a volume ratio of the MgO, the ZrO₂ and the Al₂O₃ is MgO:ZrO₂:Al₂O₃ = 1.5 to 2.5 : 1.5 to 2.5 : 1.0.

The sintered friction material for a high speed railway vehicle in the present invention can further include at least one of Sn and Zn in an amount of 15% by volume or less.

In addition, the method for producing a sintered friction material for a high speed railway vehicle in the present invention includes:
a mixing step of mixing 1% by volume to 20% by volume of an FeCr powder, 5% by volume to 20% by volume of a metal oxide powder, and 30% by volume to 60% by volume of a lubricant with a Cu powder serving as a base material, thereby obtaining a mixed powder thereof;
a molding step of putting the mixed powder in a molding die, followed by pressure molding it, thereby obtaining a preformed body thereof; and
a sintering step of superposing the preformed body on a pressure plate, followed by firing it, thereby obtaining a sintered body thereof.

It is preferred that the method further includes:
a processing step of sizing the sintered body at normal temperature under 50 MPa to 90 MPa for 2 seconds to 5 seconds, followed by grinding it to have a predetermined thickness.

MgO, ZrO₂ and Al₂O₃ are used as the metal oxide. It is preferred that a volume ratio of the MgO, the ZrO₂, and the Al₂O₃ is MgO:ZrO₂:Al₂O₃ = 1.5 to 2.5 : 1.5 to 2.5 : 1.0.

In the mixing step, 15% by volume or less of at least one of Sn and Zn may be further mixed.

It is preferred that an FeCr powder having an average particle diameter of 10 µm to 300 µm is used as the FeCr powder. In addition, it is preferred that a metal oxide powder having an average particle diameter of 50 µm to 400 µm is used as the metal oxide powder.

### Advantageous Effects of the Invention

In the present invention, it is possible to provide a sintered friction material for a high speed railway vehicle, capable of keeping a high friction coefficient stably even in a high speed range beyond 300 km/h. In addition, it is possible to provide a method capable of easily producing the sintered friction material for a high speed railway vehicle in a factory scale. Thus, the present invention has an extremely great industrial significance.

### Brief Description of the Drawings

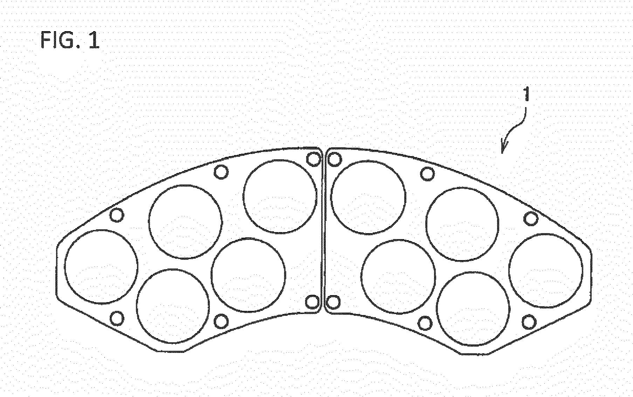

[FIG. 1] FIG. 1 is a schematic plan view showing one embodiment of a sintered friction material for a high speed railway vehicle in the present invention.

### Description of Embodiments

As described above, it has been known that ferrochrome (FeCr) in a sintered friction material has a function of preventing its base material from being adhered during deceleration from a high speed range. However, differently from iron as a friction modifier, it has been considered that the ferrochrome itself does not have any function of improving a friction coefficient directly.

As a result of continued investigation for this point, the present inventors obtained the knowledge that when a high speed railway vehicle much heavier than a automobile or a two-wheeled vehicle is decelerated from a high speed range beyond 300 km/h, the surface temperature of a sintered friction material reaches a high temperature beyond 1,000°C so that FeCr can be adhered with a counterpart material to show a high friction coefficient. In addition, the present inventors obtained the knowledge that due to excellent oxidation resistance of the FeCr, no iron oxide layer is formed on the surface of the sintered friction material even when the FeCr is exposed to such a high temperature.

On the other hand, when a high friction coefficient is ensured by the adhesion force between the sintered friction material and the counterpart material, there is a problem that a transferred substance or a reaction product is generated on the surface of the counterpart material. Particularly for use in a high speed railway vehicle, the transferred substance or the reaction product has great influence because huge energy is required for deceleration. Therefore, it may be difficult to keep the high friction coefficient stably for a long time. In consideration of this point, the present inventors continued investigation further, and as a result, the present inventors obtained the knowledge that the influence of the transferred substance or the reaction product can be removed effectively if added amounts, kinds, etc. of an abrasive and lubricant to be added as friction modifiers are optimized. The present invention has been completed based on these findings.

The sintered friction material for a high speed railway vehicle (hereinafter referred to as "sintered friction material") in the present invention will be described in two sections, "1. Sintered Friction Material for High Speed Railway Vehicle" and "2. Method for Producing Sintered Friction Material for High Speed Railway Vehicle". In the present invention, the shape or dimensions of the sintered friction material is not particularly limited, but the description will be made along a brake lining having a thickness of from 15 mm to 55 mm, a short length of 100 mm to 200 mm and a long length of 350 mm to 550 mm as shown in FIG. 1 by way of example.

### 1. Sintered Friction Material for High Speed Railway Vehicle

### (1) Composition

The sintered friction material in the present invention includes Cu as a base material, and 1% by volume to 20% by volume of ferrochrome (FeCr), 5% by volume to 20% by volume of a metal oxide, and 30% by volume to 60% by volume of a lubricant.

### [Base material]

In the sintered friction material in the present invention, Cu is used as a base material. This is because the thermal conductivity of Cu is so excellent that the surface temperature of the sintered friction material can be prevented from rising suddenly, in comparison with a sintered friction material using Fe or an Fe alloy as a base material.

The content of Cu must be high enough to constitute the matrix of the sintered friction material. According to the present invention, the content of Cu is 20% by volume or more, and more preferably 30% by volume or more. When the content of Cu is less than 20% by volume, the sintered friction material deteriorates in moldability or strength due to the relation to the other constituent elements. In addition, there is a case that satisfactory thermal conductivity cannot be ensured. On the contrary, the upper limit of the content of Cu should depend on the relation to added components such as friction modifier or abrasives, which will be described later. According to the present invention, as the upper limit of the content of Cu, it is 50% by volume or less, and more preferably 45% by volume or less.

In the sintered friction material in the present invention, a small amount of at least one of tin (Sn) and zinc (Zn) may be added as a sintering additive to Cu so that the base material can be formed into a Cu-Sn alloy, a Cu-Zn alloy or a Cu-Sn-Zn alloy. When the base material is formed of such a Cu alloy, the sintered friction material can be sintered at a low temperature. The content of the sintering additives is preferably 15% by volume or less. When the content of the sintering additives exceeds 15 % by volume, there is a fear that the liquid phase temperature of the sintered friction material may decrease to lower the heat-resistant temperature of the sintered friction material.

### [Friction Modifier]

In the present invention, ferrochrome (FeCr) is used as a friction modifier. The melting point of FeCr falls within a range of from 1,400°C to 1,500°C, which is higher than the melting point of Cu (1,083°C). Accordingly, even if the surface of the friction material reaches a high temperature exceeding 1,000°C when the high speed railway vehicle is decelerated from a high speed range beyond 300 km/h, the friction material can be adhered with the counterpart material to show a high friction coefficient. In addition, since FeCr has excellent oxidation resistance, there is no fear that FeCr may be oxidized due to friction heat generated during the deceleration. It is therefore possible to keep the high friction coefficient stably.

Any one of high-carbon FeCr, medium-carbon FeCr and low-carbon FeCr can be used as the FeCr. In terms of the heat-resistant temperature of the FeCr, it is preferable that low-carbon FeCr is used.

It is necessary that the content of FeCr is 1% by volume to 20% by volume, preferably 2% by volume to 10% by volume, and more preferably 4% by volume to 8% by volume. When the content of FeCr is less than 1% by volume, an addition effect of FeCr cannot be obtained. On the contrary, when the content of FeCr exceeds 20% by volume, the wear amount of the counterpart material may increase extremely due to high hardness of FeCr in a solid state.

### [Abrasive]

The abrasive is a component to be added to enhance the friction coefficient and grind off a transferred substance or a reaction product generated on a friction surface of the counterpart material (disc rotor) by the grinding function of the abrasive so as to keep the friction surface clean. In the sintered friction material in the present invention, adhesion force with the counterpart material is utilized to ensure a high friction coefficient in a high speed range. It is therefore important to select the contents and kinds of such an abrasive and a lubricant which will be described next.

In the sintered friction material in the present invention, a metal oxide is used as the abrasive. It is necessary that the content of the metal oxide is 5% by volume to 20% by volume, preferably 6% by volume to 15% by volume, and more preferably 7% by volume to 13% by volume. When the content of the metal oxide is less than 5% by volume, the aforementioned functions cannot be shown satisfactorily. On the contrary, when the content of the metal oxide exceeds 20% by volume, aggressiveness against the counterpart material is excessively increased.

For use in a high speed railway vehicle as in the present invention, a combination of magnesia (MgO), zirconia (ZrO₂) and alumina (Al₂O₃) is used in order to ensure the life of the disc rotor which is the counterpart material.

The volume ratio MgO:ZrO₂:Al₂O₃ is preferably 1.5 to 2.5 : 1.5 to 2.5 : 1.0, more preferably 1.8 to 2.3 : 1.8 to 2.3 : 1.0, and further more preferably 2 : 2 : 1. In this manner, it is possible to provide an appropriate grinding function in the sintered friction material to thereby keep the friction coefficient more stably during deceleration from a high speed range.

### [Lubricant]

The lubricant is a component to be added to prevent seizure with the counterpart material and improve the life (durability) of the sintered friction material. In the sintered friction material in the present invention, at least one kind selected from graphite, molybdenum disulfide (MoS₂), tungsten disulfide (WS₂), calcium fluoride (CaF₂), etc. may be used as the lubricant in the same manner as in the conventional art. Among them, graphite is preferably used because of a small environmental load.

When the graphite is used as the lubricant, expanded graphite or artificial graphite may be used as well as natural graphite. Among them, natural graphite or artificial graphite is preferably used, and a combination of natural graphite and artificial graphite is more preferably used. Scaly graphite is preferably used as the natural graphite.

When scaly graphite and artificial graphite are used in combination, the volume ratio of the scaly graphite and the artificial graphite is preferably 2.5 to 3.5 : 1.0, and more preferably 2.8 to 3.2 : 1.0. In this case, it is possible to improve the wear resistance during deceleration from a high speed range.

It is necessary that the total content of such lubricants is 30% by volume to 60% by volume, preferably 35% by volume to 50% by volume, and more preferably 37% by volume to 48% by volume. When the lubricant content is less than 30% by volume, the addition effect by the lubricant cannot be obtained satisfactorily. On the contrary, when the lubricant content exceeds 60% by volume, it is not possible to ensure satisfactory strength in the sintered friction material.

### (2) Properties

### [Friction Coefficient]

As described above, FeCr is used as a friction modifier in the sintered friction material in the present invention. It is therefore possible to show a high friction coefficient even in a high speed range. In addition, there is no fear that an iron oxide layer may be formed due to friction heat generated during deceleration. In addition, when the contents and kinds of the abrasive and the lubricant are restricted suitably, it is possible to remove a transferred substance or reaction product generated on the surface of the counterpart material. It is therefore possible to keep the high friction coefficient stably for a long time.

More specifically, when dynamometer test (equivalent to emergency braking) is performed on the following conditions using the sintered friction material in the present invention, an average value of a friction coefficient (average friction coefficient) µₐᵥₑ at 365 km/h can be made not lower than 0.30, and preferably not lower than 0.33. In addition, an instantaneous minimum value of the friction coefficient (minimum friction coefficient) µₘᵢₙ at the same speed can be made not lower than 0.25, and preferably not lower than 0.30.

### (Conditions of Dynamometer Test)

- Moment of inertia: 121 kg·m²
- Initial speed: 365 km·h⁻¹
- Number of tests: three times
- Counterpart material: forged steel disc rotor for Shinkansen

### [Wear Amount]

As described above, FeCr is hard in a solid state. Accordingly, as the FeCr content increases, the aggressiveness of the sintered friction material is increased. Thus, there is a fear that the wear amount of the counterpart material may be increased. As a solution to such a problem, the FeCr content is adjusted appropriately in the sintered friction material in the present invention, so that the wear amount of the counterpart material can be suppressed while keeping the high friction coefficient. The wear amount of the counterpart material can be measured, for example, by use of a section measuring instrument.

### 2. Method for Producing Sintered Friction Material for High Speed Railway Vehicle

The method for producing the sintered friction material in the present invention includes a mixing step of mixing 1% by volume to 20% by volume of an FeCr powder, 5% by volume to 20% by volume of a metal oxide powder, and 30% by volume to 60% by volume of a lubricant with a Cu powder serving as a base material, thereby obtaining a mixed powder thereof; a molding step of putting the mixed powder in a molding die, followed by pressure molding, thereby obtaining a preformed body thereof; and a sintering step of superposing the preformed body on a pressure plate, followed by firing, thereby obtaining a sintered body thereof. The method for producing the sintered friction material in the present invention will be described step by step.

### (1) Mixing Step

In the mixing step, 1% by volume to 20% by volume of an FeCr powder, 5% by volume to 20% by volume of a metal oxide powder, and 30% by volume to 60% by volume of a lubricant are mixed with a Cu powder serving as a base material to obtain a mixed powder

### a) Raw Material Powders

Raw material powders that can be used in the production method in the present invention are not limited especially, but the following ones are preferably used. The mixing ratio of the raw material powders, the volume ratio of the MgO powder, the ZrO₂ powder and the Al₂O₃ powder are similar to the composition ratios in the aforementioned sintered friction material, and description thereof will be omitted.

### [Cu Powder]

A Cu powder having an average particle diameter of 10 µm to 200 µm is preferably used as the Cu powder. A Cu powder having an average particle diameter of 30 µm to 100 µm is more preferably used. In this case, the raw material powders can be dispersed in the mixed powder in the mixing step, so that the obtained sintered friction material can have a uniform composition.

When a sintering additive such as Sn or Zn is used, a sintering additive having an average particle diameter of 5 µm to 100 µm is preferably used, and a sintering additive having an average particle diameter of 10 µm to 80 µm is more preferably used.

In addition, in the production method in the present invention, a Cu alloy powder such as Cu-Sn alloy powder, Cu-Zn alloy powder or Cu-Sn-Zn alloy powder may be used in place of the Cu powder. In this case, a Cu alloy powder having an average particle diameter of 5 µm to 100 µm is preferably used as the Cu alloy powder, and a Cu alloy powder having an average particle diameter of 10 µm to 80 µm is more preferably used.

### [FeCr powder]

An FeCr powder having an average particle diameter of 10 µm to 300 µm is used as the FeCr powder, and an FeCr powder having an average particle diameter of 30 µm to 100 µm is more preferably used. When the average particle diameter of the FeCr powder is smaller than 10 µm, the ratio of FeCr exposed from the surface of the sintered friction material may be reduced. Thus, there is a fear that the friction performance may be lowered. On the contrary, when the average particle diameter of the FeCr powder exceeds 300 µm, segregation may occur in the FeCr exposed from the surface of the sintered friction material. Thus, there is a fear that a high friction region may be formed locally.

### [Metal Oxide Powder]

A metal oxide powder having an average particle diameter of 50 µm to 400 µm is used as the metal oxide powder. When the average particle diameter of the metal oxide powder is smaller than 50 µm, there is a fear that cleanability on the friction surface of the disc rotor may be insufficient. On the contrary, when the average particle diameter of the metal oxide powder exceeds 400 µm, segregation may occur in metal oxide exposed from the surface of the sintered friction material. Thus, there is a fear that a high friction region may be formed locally.

The average particle diameter of the Cu powder, the FeCr powder and the metal oxide powder mean values (median diameters) measured by a laser diffraction type particle diameter distribution analyzer.

### [Lubricant]

When the graphite powder is used as the lubricant, a graphite powder having an average particle diameter of 10 µm to 2,000 µm is preferably used. When artificial graphite is used as the graphite powder, it is preferable that a large-particle-diameter artificial graphite (C_{L}) having an average particle diameter of 500 µm to 2,000 µm and a small-particle-diameter artificial graphite (Cs) having an average particle diameter of 50 µm to 500 µm are mixed and used at a volume ratio (C_{L}/C_{S}) of 1.5 to 2.5, and it is more preferable that those are mixed and used at a volume ratio (C_{L}/C_{S}) of 1.8 to 2.4. In this case, it is possible to obtain a sintered friction material which is not only excellent in lubricating properties but also high in strength even when a comparatively large content of graphite is contained.

In the present invention, the average particle diameter of the graphite means a value (median diameter) measured by a sieving method or a laser diffraction type particle diameter distribution analyzer.

### b) Mixing Method

The mixing method is not limited especially, but a known method can be used as long as the aforementioned raw material powders can be mixed uniformly. More specifically, it is possible to use a method in which an appropriate amount of an organic solvent is added to the aforementioned raw material powders so that the raw material powders can be wet-mixed and dispersed uniformly by a rotary mixer or the like.

### (2) Molding Step

In the molding step, the mixed powder obtained in the mixing step is put in a molding die, followed by pressure molding to obtain a preformed body. It is not necessary to heat the molding die in the molding step, but pressure molding is performed at normal temperature (about 15°C to 25°C).

It is preferable that pressuring force in the molding step is 250 MPa to 350 MPa. In addition, it is preferable that pressurizing time is 2 seconds to 5 seconds. When pressure molding is performed under the conditions, a preformed body that is satisfactorily high in molding density can be obtained efficiently.

### (3) Firing Step

In the firing step, the preformed body obtained in the molding step is superposed on a pressure plate, followed by firing it to obtain a sintered body.

On this occasion, it is preferable that sintering temperature is 800°C to 1,000°C. In addition, it is preferable that pressurizing force is 0.1 MPa to 2.0 MPa. Further, it is preferable that firing time (retention time at firing temperature) is 10 minutes to 400 minutes. When firing is performed under the conditions, it is possible to enhance the mechanical strength of the sintered friction material to thereby improve durability against tangential force generated during braking.

### (4) Processing Step

The sintered body obtained in the firing step is adjusted to have a predetermined size through a processing step. On this occasion, a processing method of the sintered body is not limited especially, but the sintered body may be, for example, processed in the following method. That is, the sintered body is sized at normal temperature under 50 MPa to 90 MPa for 2 seconds to 5 seconds, and then grinded to have a predetermined thickness. In this case, it is possible to correct the sintered body to predetermined dimensions, and it is also possible to improve the mechanical strength of the sintered body further.

### Examples

The present invention will be described below specifically with its examples and comparative examples.

### [Sintered Friction Material]

Powders shown in Table 1 were prepared as raw material powders, and the raw material powders were mixed at ratios shown in Table 2, and thus, the mixed powder was obtained. The mixed powder was put in a molding die, followed by molding by pressure molding at normal temperature under 300 MPa for 3 seconds, thereby obtaining a preformed body thereof. Next, the preformed body was superposed on a metal plate (pressure plate) plated with copper, put into a sintering furnace, and fired at 800°C to 1,000°C under 1 MPa for 60 minutes, thereby obtaining a sintered body thereof. The sintered body was cooled down to room temperature, and sized at normal temperature under 70 MPa for 3 seconds. After that, the surface of the sintered body was grinded, thereby obtaining a sintered friction material having a thickness of 20 mm and an outer diameter of 60 mm. After that, the sintered friction material was attached to a torque receiving plate by rivets. Thus, a brake lining 1 was obtained as shown in FIG. 1.

### [Evaluation of Friction Material]

Dynamometer test (equivalent to emergency braking) was performed under the following conditions using each brake lining obtained as described above. As a result, brake linings each having an average friction coefficient µₐᵥₑ of 0.33 or more and a minimum friction coefficient µₘᵢₙ of 0.30 or more were evaluated as "excellent (⊙)", brake linings each having an average friction coefficient µₐᵥₑ of 0.30 or more and a minimum friction coefficient µₘᵢₙ of 0.25 or more (excluding the braking linings each having an average friction coefficient µₐᵥₑ of 0.33 or more and a minimum friction coefficient µₘᵢₙ of 0.30 or more) were evaluated as "good (o)", and brake linings each having an average friction coefficient µₐᵥₑ of lower than 0.30 or a minimum friction coefficient µₘᵢₙ of lower than 0.25 were evaluated as "not good (×)". The results obtained thus are shown in Table 3.

In addition, after the dynamometer test, the wear amount of each counterpart material was measured by use of a section measuring instrument (SP-46D, manufactured by Kosaka Laboratory Ltd.). As a result, brake linings each causing a wear amount of smaller than 10 µm in its counterpart material were evaluated as "excellent (⊙)", brake linings each causing a wear amount of 10 µm or more and smaller than 30 µm in its counterpart material were evaluated as "good (o)", and brake linings each causing a wear amount of 30 µm or more in its counterpart material were evaluated as "not good (x)". The results obtained thus are shown in Table 3.

### (Conditions of Dynamometer Test)

- Moment of inertia: 121 kg.m²
- Initial speed: 365 km·h⁻¹
- Number of tests: three times
- Counterpart material: forged steel disc rotor for Shinkansen

**Table 1**

| | Powder | Property |
|---|---|---|
| Base material | Cu powder | average particle diameter: 40 µm |
| | Sn powder | average particle diameter: 40 µm |
| Friction modifier | FeCr powder (low-carbon FeCr) | average particle diameter: 50 µm |
| | Fe powder | average particle diameter: 50 µm |
| Abrasive | MgO powder | average particle diameter: 120 µm |
| | ZrO₂ powder | average particle diameter: 70 µm |
| | Al₂O₃ powder | average particle diameter: 70 µm |
| Lubricant | scaly graphite | average particle diameter: 50 µm |
| | artificial graphite (large) | average particle diameter: 500 µm |
| | artificial graphite (small) | average particle diameter: 100 µm |

**Table 2**

| (Unit: % by volume) | | | | | | | | | | |
|---|---|---|---|---|---|---|---|---|---|---|
| | Base material | | Friction modifier | | Lubricant | | | Abrasive | | |
| | Cu powder | Sn powder | FeCr powder | Fe powder | Artificial graphite (large) | Artificial graphite (small) | Scaly graphite | MgO powder | ZrO₂ powder | Al₂O₃ powder |
| Ex. 1 | 41.0 | 2.0 | 2.0 | 0 | 23.0 | 11.0 | 11.0 | 4.0 | 4.0 | 2.0 |
| Ex. 2 | 39.2 | 1.8 | 4.0 | 0 | 23.0 | 11.0 | 11.0 | 4.0 | 4.0 | 2.0 |
| Ex. 3 | 35.3 | 1.7 | 8.0 | 0 | 23.0 | 11.0 | 11.0 | 4.0 | 4.0 | 2.0 |
| Ex. 4 | 31.5 | 1.5 | 12.0 | 0 | 23.0 | 11.0 | 11.0 | 4.0 | 4.0 | 2.0 |
| Ex. 5 | 23.9 | 1.1 | 20.0 | 0 | 23.0 | 11.0 | 11.0 | 4.0 | 4.0 | 2.0 |
| Comp. Ex. 1 | 43.0 | 2.0 | 0 | 0 | 23.0 | 11.0 | 11.0 | 4.0 | 4.0 | 2.0 |
| Comp. Ex. 2 | 41.0 | 2.0 | 0 | 2.0 | 23.0 | 11.0 | 11.0 | 4.0 | 4.0 | 2.0 |
| Comp. Ex. 3 | 39.2 | 1.8 | 0 | 4.0 | 23.0 | 11.0 | 11.0 | 4.0 | 4.0 | 2.0 |
| Comp. Ex. 4 | 31.5 | 1.5 | 0 | 12.0 | 23.0 | 11.0 | 11.0 | 4.0 | 4.0 | 2.0 |
| Comp. Ex. 5 | 23.9 | 1.1 | 0 | 20.0 | 23.0 | 11.0 | 11.0 | 4.0 | 4.0 | 2.0 |

**Table 3**

| | Average friction coefficient µₐᵥₑ | Minimum friction coefficient µₘᵢₙ | Evaluation | |
|---|---|---|---|---|
| | | | Friction coefficient | Wear amount |
| Ex. 1 | 0.30 | 0.26 | ○ | ○ |
| Ex. 2 | 0.30 | 0.27 | ○ | ⊙ |
| Ex. 3 | 0.31 | 0.29 | ○ | ⊙ |
| Ex. 4 | 0.34 | 0.32 | ⊙ | ○ |
| Ex. 5 | 0.37 | 0.33 | ⊙ | ○ |
| Comp. Ex. 1 | 0.28 | 0.26 | × | ○ |
| Comp. Ex. 2 | 0.28 | 0.25 | × | × |
| Comp. Ex. 3 | 0.26 | 0.22 | × | × |
| Comp. Ex. 4 | 0.22 | 0.17 | × | × |
| Comp. Ex. 5 | 0.20 | 0.14 | × | x |

### [Comprehensive Evaluation]

From Tables 1 to 3, it can be found that each of the sintered friction materials in Examples 1 to 5 can have an average friction coefficient µₐᵥₑ of 0.30 or more and a wear amount of smaller than 30 µm in a high speed range. Particularly, it can be found that each of the sintered friction materials in Examples 2 and 3 shows a high friction property while suppressing the wear amount of its counterpart material.

On the other hand, it can be found that the average friction coefficient µₐᵥₑ at a high speed range was lowered in each of the sintered friction materials in Comparative Examples 2 to 5 using Fe as a friction modifier. It is considered that this is because Fe was oxidized due to heat generated during deceleration from the high speed range to form an iron oxide layer on the surface of the sintered friction material to thereby lower the friction force.

### Description of Reference Numeral

- 1: Brake lining

## Claims

1. A sintered friction material for a high speed railway vehicle, comprising Cu as a base material in an amount of from 20 to 50% by volume, 1% by volume to 20% by volume of FeCr, 5% by volume to 20% by volume of a metal oxide, and 30% by volume to 60% by volume of a lubricant,
optionally comprising at least one of Sn and Zn in an amount of 15% by volume or less, and
wherein the metal oxide is MgO, ZrO₂ and Al₂O₃.

2. The sintered friction material for a high speed railway vehicle according to claim 1, wherein a volume ratio of the MgO, the ZrO₂ and the Al₂O₃ is MgO:ZrO₂:Al₂O₃ = 1.5 to 2.5 : 1.5 to 2.5 : 1.0.

3. A method for producing a sintered friction material for a high speed railway vehicle, the method comprising:
a mixing step of mixing 1% by volume to 20% by volume of an FeCr powder, 5% by volume to 20% by volume of a metal oxide powder, and 30% by volume to 60% by volume of a lubricant with 20 to 50% by weight of a Cu powder serving as a base material, thereby obtaining a mixed powder thereof;
wherein MgO, ZrO₂ and Al₂O₃ are used as the metal oxide;
optionally wherein 15% by volume or less of at least one of Sn and Zn is further mixed in the mixing step;
a molding step of putting the mixed powder in a molding die, followed by pressure molding it, thereby obtaining a preformed body thereof; and
a sintering step of superposing the preformed body on a pressure plate, followed by firing it, thereby obtaining a sintered body thereof.

4. The method for producing a sintered friction material for a high speed railway vehicle according to claim 3, the method further comprising:
a processing step of sizing the sintered body at normal temperature under 50 MPa to 90 MPa for 2 seconds to 5 seconds, followed by grinding it to have a predetermined thickness.

5. The method for producing a sintered friction material for a high speed railway vehicle according to claim 3, wherein a volume ratio of the MgO, the ZrO₂, and the Al₂O₃ is MgO:ZrO₂:Al₂O₃ = 1.5 to 2.5 : 1.5 to 2.5 : 1.0.

6. The method for producing a sintered friction material for a high speed railway vehicle according to any one of claims 3 to 5, wherein an FeCr powder having an average particle diameter measured by a laser diffraction type particle diameter distribution analyser of 10 µm to 300 µm is used as the FeCr powder.

7. The method for producing a sintered friction material for a high speed railway vehicle according to any one of claims 3 to 6, wherein a metal oxide powder having an average particle diameter measured by a laser diffraction type particle diameter distribution analyser of 50 µm to 400 µm is used as the metal oxide powder.

## Patentansprüche

1. Sinterreibwerkstoff für ein Hochgeschwindigkeitsschienenfahrzeug, umfassend Cu als ein Basismaterial in einer Menge von 20 bis 50 Vol.%, 1 Vol.-% bis 20 Vol.-% FeCr, 5 Vol.-% bis 20 Vol.-% eines Metalloxids und 30 Vol.-% bis 60 Vol.-% eines Schmiermittels,
gegebenenfalls umfassend mindestens eines von Sn und Zn in einer Menge von 15 Vol.-% oder weniger, und
wobei das Metalloxid MgO, ZrO₂ und Al₂O₃ ist.

2. Sinterreibwerkstoff für ein Hochgeschwindigkeitsschienenfahrzeug nach Anspruch 1, wobei ein Volumenverhältnis von MgO, ZrO₂ und Al₂O₃
MgO:ZrO₂:Al₂O₃ = 1,5 bis 2,5 : 1,5 bis 2,5 : 1,0 beträgt.

3. Verfahren zur Herstellung eines Sinterreibwerkstoffes für ein Hochgeschwindigkeitsschienenfahrzeug, wobei das Verfahren umfasst:
einen Mischschritt des Mischens von 1 Vol.-% bis 20 Vol.-% eines FeCr-Pulvers, 5 Vol.-% bis 20 Vol.-% eines Metalloxidpulvers und 30 Vol.-% bis 60 Vol.% eines Schmiermittels mit 20 bis 50 Gew.-% eines Cu-Pulvers, das als ein Basismaterial dient, wodurch ein gemischtes Pulver erhalten wird;
wobei MgO, ZrO₂ und Al₂O₃ als das Metalloxid verwendet werden;
wobei gegebenenfalls 15 Vol.-% oder weniger von mindestens einem von Sn und Zn des Weiteren in dem Mischschritt gemischt werden;
einen Formgebungsschritt, bei dem das gemischte Pulver in ein Formwerkzeug eingeführt wird, gefolgt von einem Druckformen, wodurch ein vorgeformter.
Körper erhalten wird; und
einen Sinterschritt, bei dem der vorgeformte Körper auf eine Druckplatte gelegt wird, gefolgt von einem Sinterschritt, wodurch ein gesinterter Körper erhalten wird.

4. Verfahren zur Herstellung eines Sinterreibwerkstoffes für ein Hochgeschwindigkeitsschienenfahrzeug nach Anspruch 3, wobei das Verfahren des Weiteren umfasst:
einen Verarbeitungsschritt des dimensionieren des Sinterkörpers bei normaler Temperatur unter 50 MPa bis 90 MPa für 2 Sekunden bis 5 Sekunden, gefolgt von einem Schleifen, um eine vorbestimmte Dicke zu erhalten.

5. Verfahren zur Herstellung eines Sinterreibwerkstoffes für ein Hochgeschwindigkeitsschienenfahrzeug nach Anspruch 3, wobei ein Volumenverhältnis von MgO, ZrO₂ und Al₂O₃ MgO:ZrO₂:Al₂O₃ = 1,5 bis 2,5 : 1,5 bis 2,5 : 1,0 beträgt.

6. Verfahren zur Herstellung eines Sinterreibwerkstoffes für ein Hochgeschwindigkeitsschienenfahrzeug nach einem der Ansprüche 3 bis 5, wobei ein FeCr-Pulver mit einem durchschnittlichen Partikeldurchmesser, gemessen mit einem Teilchendurchmesserverteilungsanalisator vom Laserbeugungstyp, von 10 µm bis 300 µm als das FeCr-Pulver verwendet wird.

7. Verfahren zur Herstellung eines Sinterreibwerkstoffes für ein Hochgeschwindigkeitsschienenfahrzeug nach einem der Ansprüche 3 bis 6, wobei ein Metalloxidpulver mit einem durchschnittlichen Partikeldurchmesser, gemessen mit einem Teilchendurchmesserverteilungsanalisator vom Laserbeugungstyp, von 50 µm bis 400 µm als das Metalloxidpulver verwendet wird.

## Revendications

1. Matériau de friction fritté pour un véhicule ferroviaire à grande vitesse, comprenant Cu comme matériau de base dans une teneur allant de 20 % à 50 % en volume, de 1 % en volume à 20 % en volume de FeCr, de 5 % en volume à 20 % en volume d'un oxyde métallique et de 30 % en volume à 60 % en volume d'un lubrifiant,
comprenant en option au moins l'un de Sn et de Zn dans une teneur de 15 % en volume ou moins, et
dans lequel l'oxyde métallique est MgO, ZrO₂ et Al₂O₃.

2. Matériau de friction fritté pour un véhicule ferroviaire à grande vitesse selon la revendication 1, dans lequel le rapport volumique du MgO, du ZrO₂ et d'Al₂O₃ est :
MgO : ZrO₂ : Al₂O₃ = 1,5 à 2,5 : 1,5 à 2,5 : 1,0.

3. Procédé de fabrication d'un matériau de friction fritté pour un véhicule ferroviaire à grande vitesse, le procédé comprenant :
une étape de mélange consistant à mélanger de 1 % en volume à 20 % en volume d'une poudre de FeCr, de 5 % en volume à 20 % en volume d'une poudre d'oxyde métallique et de 30 % en volume à 60 % en volume d'un lubrifiant avec de 20 % à 50 % en poids d'une poudre de Cu utilisée comme matériau de base, ce qui permet ainsi d'obtenir une poudre mélangée de ceux-ci,
dans lequel MgO, ZrO₂ et Al₂O₃ sont utilisés en tant qu'oxyde métallique,
dans lequel en option 15 % en volume ou moins d'au moins l'un de Sn et Zn est en outre mélangé lors de l'étape de mélange,
une étape de moulage consistant à placer la poudre mélangée dans une matrice de moulage, suivie par un moulage sous pression de celle-ci, ce qui permet ainsi d'obtenir un corps préformé de celui-ci, et
une étape de frittage consistant à superposer le corps préformé sur une plaque de pression, suivie par son brûlage, ce qui permet d'obtenir ainsi un corps fritté de celui-ci.

4. Procédé de fabrication d'un matériau de friction fritté pour un véhicule ferroviaire à grande vitesse selon la revendication 3, le procédé comprenant en outre :
une étape de traitement consistant à dimensionner le corps fritté à température normale sous une pression de 50 MPa à 90 MPa pendant de 2 secondes à 5 secondes, suivie par son meulage pour qu'il présente une épaisseur prédéterminée.

5. Procédé de fabrication d'un matériau de friction fritté pour un véhicule ferroviaire à grande vitesse selon la revendication 3, dans lequel le rapport volumique du MgO, du ZrO₂ et d'Al₂O₃ est :
MgO : ZrO₂ : Al₂O₃ = 1,5 à 2,5 : 1,5 à 2,5 : 1,0.

6. Procédé de fabrication d'un matériau de friction fritté pour un véhicule ferroviaire à grande vitesse selon l'une quelconque des revendications 3 à 5, dans lequel une poudre de FeCr présentant un diamètre moyen de particule de 10 µm à 300 µm, mesuré par un analyseur de répartition de diamètres des particules de type diffraction par laser est utilisée comme poudre de FeCr.

7. Procédé de fabrication d'un matériau de friction fritté pour un véhicule ferroviaire à grande vitesse selon l'une quelconque des revendications 3 à 6, dans lequel une poudre d'oxyde métallique présentant un diamètre moyen de particule de 50 µm à 400 µm, mesuré par un analyseur de répartition de diamètres des particules de type diffraction par laser est utilisée comme poudre d'oxyde métallique.
